# EUROPEAN PATENT APPLICATION

(11) **EP 2 514 653 A2**
(43) Date of publication of application: **24.10.2012**
(21) Application number: 12002293.4
(22) Date of filing: 28.03.2012
(51) Int. Cl.: B62B 3/10, B65F 1/14

(54) **Service trolley for cleaners**

(30) Priority: 20.04.2011 IT BG20110014 U
(71) Applicant: GE.IM.PUL. SRL, 23899 Robbiate (LC) (IT)
(72) Inventor: Amoruso, Salvatore, 23899 Robbiate (LC) (IT)

(57) **Abstract**

Service trolley for cleaners, having the particularity of comprises two tubular U-frames supporting, in the upper longitudinal sections, two circles used to hold garbage bags, being scissor hinged together and each one made of two half U-frames linked together by means of telescopic coupling, and an auxiliary grid frame supporting sacks made of two crossed half-grids, each one composed by transversal elements articulated in centre line linked to various longitudinal elements, such two half-grids being constrained one another and co-operating by means of sliding joints composed of through holes placed along the transversal elements which, crossed by the longitudinal ones, during the telescopic extension create static linking constraints between the two half-grids.

## Description

As known, in the field of the routine maintenance of spaces inside working buildings, such as offices, laboratories and alike, it is advisable to operate periodic cleaning and disinfection interventions. These operations often provided by specialists, who work during offices closure time to guarantee an easier and free way in.

Those operators, named with the generic title of 'Cleaning Service Companies', should respect specific operational protocols with the aim to reach a general acceptable level of hygiene and cleanliness for all the environments. To quicken the procedure, each operator uses a trolley on which all the necessary accessories are placed, such as brooms, brushes, cleaning clothes and sponges and a rubbish bag, hanged inside the trolley. Then the operator will proceed methodically cleaning each work station of the office, laboratory, etc., washing the desk, dusting the computer equipments, emptying the wastebaskets, and so on.

The standardization of the cleaning operations of each work station is essential to the overhead reduction of a Cleaning Service Company.

Therefore the trolley must be furnished of all the useful accessories to perform such operations.

Various types of trolleys at the Prior Art are summarized in two macro-categories: "light" and "heavy". Light trolleys are suitable to pass through almost every kind of environment, even through the tightest ones. Usually they come to be hand foldable to be placed in narrow service places, when unused.

Heavy trolleys are furnished with much more accessories, which often turn out to be excessive to be used in environments divided in smaller spaces, such as the majority of the offices.

With regard to waste-paper baskets, usually placed near any kind of work space, recently an issue was raised after the coming into effect of new laws ruling the separation of recyclable waste. In the major parts of the offices it has been necessary to provide the work spaces of proper waste-paper bins where to collect paper separated from the undistinguished waste.

This new regulation forces the Cleaning Service Companies operators to bring with them two different garbage bags: for paper and undistinguished waste.

Moreover, do happen in limited circumstances that the garbage produced and to be distinguished is not made up of paper.

Since standard "light" trolleys don't contemplate a proper support for two different waste bags, the cleaners have to resort to something by themselves. Using double sack trolleys could make rise to different issues due to the increased volume of garbage; same problem noticed for the "heavy" trolleys, unsuitable for tight spaces.

Therefore, aim of the present description is to define a service trolley for cleaners, which could be employed with two garbage bags.

Other aim is to define a trolley, as described above, which could be folded up when not useful.

Other aim is to define a cleaning trolley, as described above, which, in 'fold-up mode', won't take up more volume than the actual mono sack ones.

Other aim is to define a cleaning trolley as above, which, if needed, could turn into a mono sack one.

Other aim is to define a cleaning trolley as above, realized with the same production costs estimated for the mono sack type.

These and other aims are going to appear as reached all through the following detailed reading.

It is going to be shown a cleaning trolley for cleaners, especially for internal environments.

The service trolley is illustrated through attached figures, provided only as a guide and not as a limit, and they are;

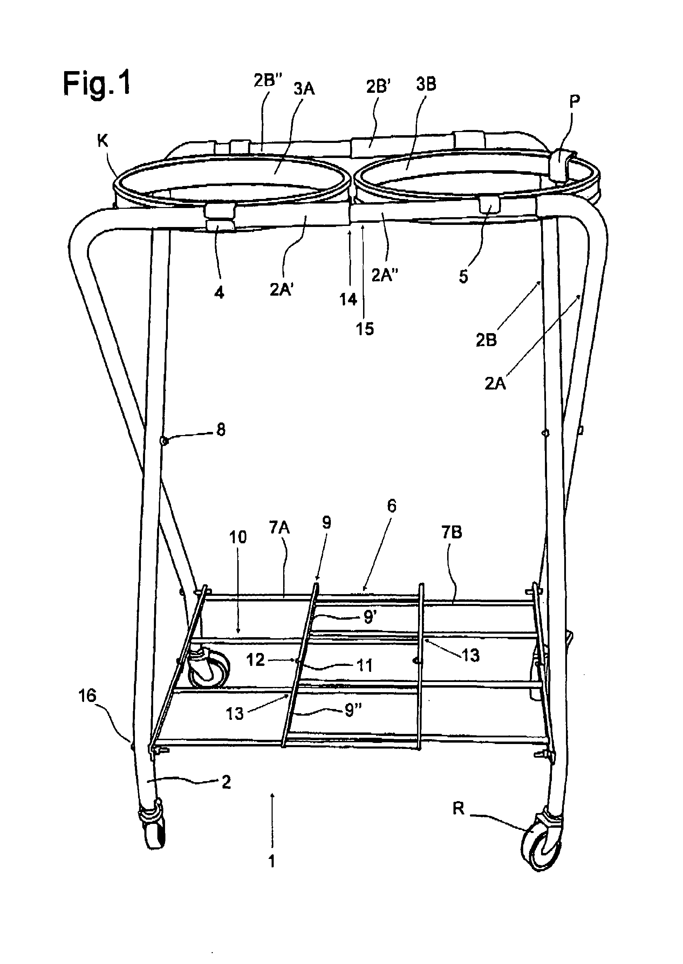

- Fig. 1 shows the present invention from a general perspective view of the open and widened shape for the 'double sack mode'.

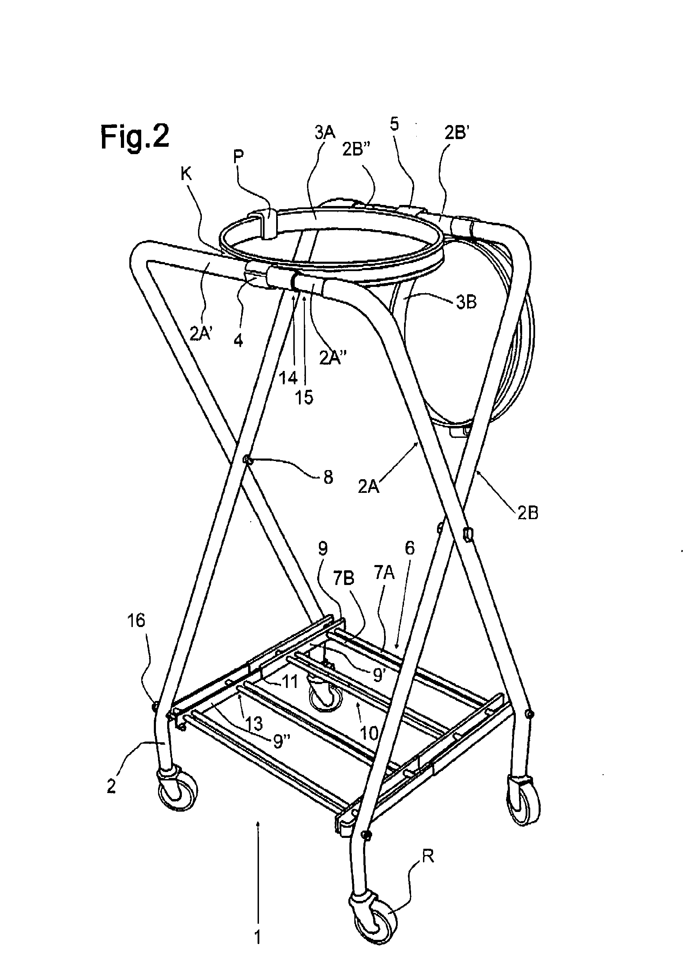

- Fig. 2 shows the present invention from a general perspective view in an open and tightened shape for the 'mono sack mode'.

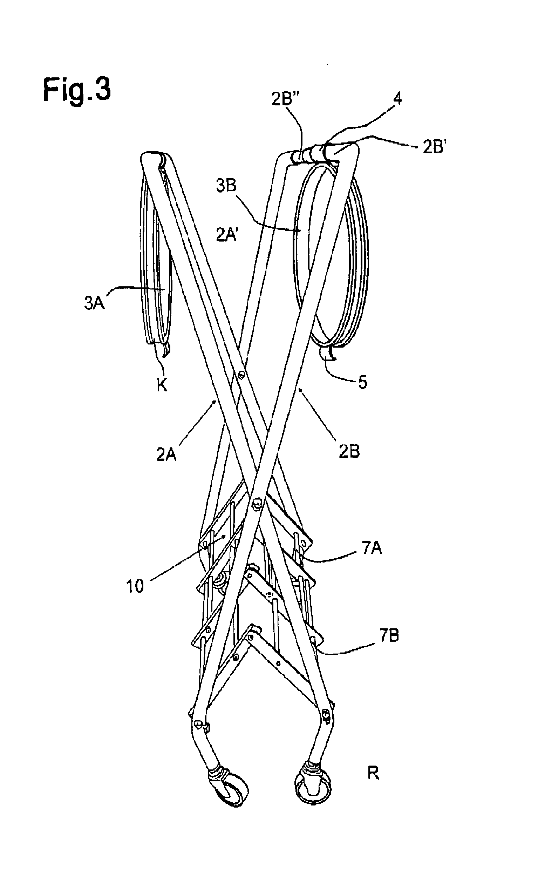

- Fig. 3 shows the present invention from a general perspective view of the 'closed mode'.

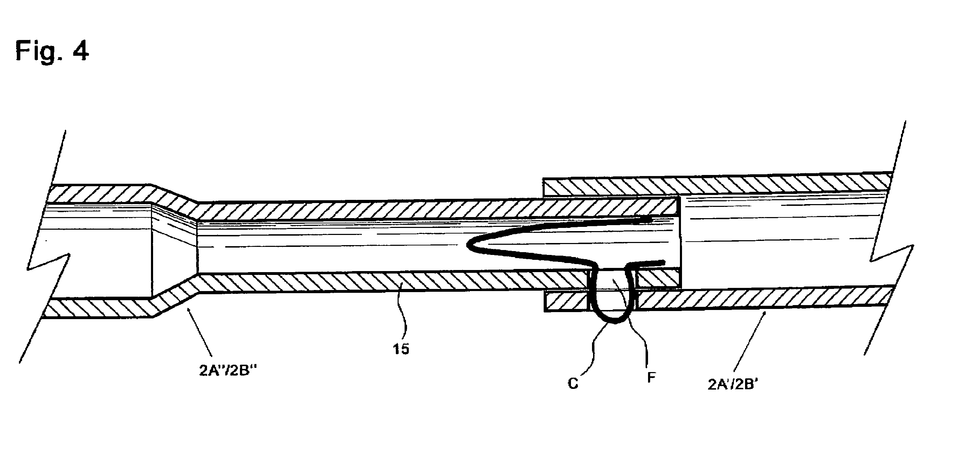

- Fig. 4 shows a detail of the telescopic sliding area of the frame, and of the locking system with an elastic hinge.

In reference to the above described figures, the trolley 1 shows a tubular frame 2 made of a resistant and durative material, easily handled, approximately Aluminium Alloy. The tubular structure 2 is composed of a double U-frame 2A, 28, supporting in the upper longitudinal sections two circles 3A, 3B as sack holders. Circles 3A, 38 show one or more lateral hinging strips 4 and a overlooking grip 5.

The two U-frames 2A,2B each made of 2 half U-frames 2A', 2B', 2A", 2B" linked together through telescopic coupling 14; the two U-frames 2A, 2B make a scissor hinge 8 in the middle point sited on the long side of the half U-frames 2A', 2B', 2A", 2B", which reach the ground resting on standard pivotal wheels R.

In the underside, the trolley 1 is provided with a grid frame 6, which helps the two circles 3A, 3B supporting the respective sacks when full. Such grid 6 is constituted of two crossing half-grid 7A, 7B, each one made of at least two crossbars 9, linked to a series of longitudinal bars 10.

Each crossbar 9 is hinged in centre line with standard hinges 11 (stainless steel rivet or equivalent) and blocked in the articulation to the lower level by the presence of blocking elements 12. One section 9' of each crossbar 9 is made of an inverted L-section, in order to take advantage of its shape accomplishing the cited blockage function 12 for the interference with the high surface of the interconnected section 9".

As for the example of the present description, the crossing elements 9 of each half-grid 7A, 7B are two, while the longitudinal ones 10 are four. Each half-grid is composed of two transversal elements 9 hinged and fixed with generic systems to four longitudinal tubular elements 10. The two half-grids 7A, 7B are linked to each other with through holes 13, and, crossed by longitudinal elements 10, turn into sliding joints linking the two half-grids.

The same longitudinal elements 10 could fit for a passing hinge 16 supporting the crossbars 9 to the low extremities of the U-frames 2A, 2B; in the described example, such hinge 16 is realized with a generic bolt.

The telescopic coupling 14 was made providing one of the two U-frames of a tubular bracket 15 with an external diameter fit to be easily insert in the other half of the U-frame; in the shown example of the present description, the tubular brackets 15 are fixed to the half U-frames 2A", 2B", which severally fit into half U-frames 2A', 2B'.

Such tubular brackets are made of tubular bars with little diameter pasted to the ) inner part of the tubular 2.

The widened position can be balanced with standard spring clip systems, working as a constraint between two half U-frames 2A", 28" through suitable holes F.

Functional balance of the trolley 1 is accomplished with the insertion in working position of the circles 3A, 38. Each one of such circles, provided of holding sacks systems with external circumferential groove K fit for use of tubular elastic bands and/or clip fasteners P as per known technique, when unused hangs hold only by the hinge 4 of one of the two U-frames; while in working modality every circle is fixed to the other U-frame through the grip 5. It is composed by a half circle with a diameter suited for reducing plays between such grip and the connected tubular bracket of the U-frame.

The skew-symmetric position of the U-frames 2A, 28 and the respective half U-frames is an advantage from the point of view of production costs, since it allows reducing the number of possible shapes, whether in case of moulding, bending, blanking and so on.

During the employment, the trolley 1, described in the present document, allows to be set up in 'double sack mode', which includes the full telescopic extent of the half U-frames, and the corresponding full widening between the two half-grids. In such modality, it is possible to work using only one supporting bag circle, or both, independently.

Alternatively, the trolley 1 can be used in 'mono sack mode', reducing the longitudinal volume, bringing at the minimum the telescopic range and putting in working modality only the 3A circle. During the inactivity the trolley 1 can be easily hand folded, it will take up a small space, equal to that of those trolleys at the Prior Art.

## Claims

1. Cleaning trolley for Cleaners, **characterized by**:
- A double U-frame (2A,2B) supporting in the upper longitudinal sections two circles (3A,3B), used to hold garbage bags, each provided of one or more lateral hinging strips (4) and an overlooking grip, such two U-frames (2A, 2B), being scissor hinged together (8) and made of two half U-frames (2A', 28', 2A", 2B") linked together by means of telescopic coupling (14), reaching the ground with two common pivoting wheels (R);
- A grid frame supporting sacks, when full, made of two crossed half-grids (7A, 7B), each one at least composed of two transversal elements articulated in centre line with a hinge (11), linked to various longitudinal bars (10), such two half-grids (7A, 7B), are constrained and co-operating one another by means of sliding joints, connecting the two half-grids.

2. Service trolley, as per claim 1, where the transversal elements (9) are constituted by the coupling of two different hinged sections (9',9"), one of which (9') has an inverted L-section, aiming to use its shape (12) to lock the downward motion by means of the interference with the upper surface of the linked section (9").

3. Service trolley, as previous claims, where a sliding joint is composed of through holes placed along the transversal elements (9), which, crossed by the longitudinal ones (10), during the telescopic extension create static linking constraints between the two half-grids.

4. Service trolley as previous claims, where the two half U-frames (2A', 2B', 2A", 28"), the half-grids (7A, 7B) and the supporting sacks circles (3A, 3B) are placed and fixed in skew-symmetric position.
